# EUROPEAN PATENT SPECIFICATION

(11) **EP 2 586 320 B1**
(45) Date of publication and mention of the grant of the patent: **24.08.2016**
(21) Application number: 11798134.0
(22) Date of filing: 21.06.2011
(51) Int. Cl.: A23L 5/20, A23L 29/00

(54) **METHOD FOR REDUCTION OF ACRYLAMIDE CONTENT IN HEAT-TREATED PROCESSED FOOD**
VERFAHREN ZUR REDUZIERUNG DES ACRYLAMIDGEHALTS IN EINEM WÄRMEBEHANDELTEN NAHRUNGSMITTEL
PROCÉDÉ PERMETTANT DE RÉDUIRE LA TENEUR EN ACRYLAMIDE DANS DES ALIMENTS TRAITÉS SOUMIS À UN TRAITEMENT THERMIQUE

(30) Priority: 20.01.2011 JP 2011009931; 25.06.2010 JP 2010145115
(43) Date of publication of application: 01.05.2013
(73) Proprietor: Kimura, Shuichi, Sendai-shi, Miyagi 981-0903 (JP); Yoshioka, Teizo, Saitama-shi, Saitama 331-0064 (JP); Yamazaki Seipan Kabushiki Kaisha, Tokyo 101-8585 (JP)
(72) Inventor: KIMURA, Shuichi, Sendai-shi, Miyagi 981-0903 (JP); TOMITA, Amy, Tokyo 158-0081 (JP); HIMATA, Katsuichi, Tokyo 130-0025 (JP)
(74) Representative: Hartz, Nikolai
(86) International application number: PCT/JP2011/064152
(87) International publication number: WO 2011/162250

(56) References cited:
- WO-A1-2004/032647
- WO-A1-2009/073437
- JP-A- 6 065 074
- JP-A- 2004 305 201
- JP-A- 2006 256 977
- RU-C1- 2 372 095
- MATSUMOTO H. ET AL.: 'Identification of Taxifolin Present in the Azuki Bean as an Oviposition Stimulant of the Azuki Bean Weevil.' JOURNAL OF PESTICIDE SCIENCE vol. 19, no. 3, August 1994, pages 181 - 186, XP055073948
- KOHYAMA N. ET AL.: 'Effects of Phenolic Compounds on the Browning of Cooked Barley' J. AGRIC. FOOD CHEM. vol. 57, no. 14, 2009, pages 6402 - 6407, XP002669829

## Description

### Field of the Invention

The present invention relates to a method for reducing a level of acrylamide in a heat-treated, processed food and an ingredient for suppressing acrylamide formation in a processed food.

### Background of the Invention

It is known that high levels of acrylamide is found in carbohydrate-rich food products that have been processed at a temperature of 120 °C or higher such as potato chips, fried potatoes, biscuits, etc. It is also known that acrylamide is formed when asparagine, one of the major amino acids found in potatoes and cereals, reacts with reducing sugar through Maillard reaction.

Acrylamide belongs to the group of the carcinogenic compounds, thus lowering the level of acrylamide in the processed foods is highly desirable.

There have been a number of reports on methods for suppressing acrylamide formation in the production process of the processed foods, such as methods for enzymatically degrading asparagine, a precursor for acrylamide (Patent Documents 1 and 2, etc.) and methods for suppressing acrylamide formation by adding various ingredients (Patent Documents 3-8).

### Prior Art Documents

### Patent Documents

Patent Document 1: JP-A-2004-283062
Patent Document 2: JP-A-2006-187301
Patent Document 3: JP-A-2004-215559
Patent Document 4: JP-A-2005-278448
Patent Document 5: JP-A-2006-174845
Patent Document 6: JP-A-2006-55159
Patent Document 7: JP-A-2007-105015
Patent Document 8: WO 2004/032647
Patent Document 9: JP-A-2004-305201

### Summary of the Invention

### Problems to be Solved by the Invention

However, no method is capable of reducing the level of acrylamide sufficiently. Furthermore, when some kinds of enzyme are added to reduce the level of acrylamide in foods, the safety of the by-product produced through the enzymatic reactions, as well as the ingredients themselves to be added, should be carefully considered.

An object of the present invention is to provide a method for reducing a level of acrylamide in a heat-treated, processed food using a highly safe and effective ingredient for suppressing acrylamide formation.

### Means for Solving the Problems

The present inventors examined plant-derived ingredients and found that the level of acrylamide in heat-treated, processed foods is able to be significantly reduced by adding dihydroquercetin that is contained in a plant such as Siberian Larch to carbohydrate-containing processed food ingredients or allowing the dihydroquercetin to permeate the carbohydrate-containing processed food ingredients, to thereby complete the present invention.

The present invention provides a method for reducing a level of acrylamide in a processed food, including adding dihydroquercetin to a carbohydrate-containing processed food ingredient or allowing dihydroquercetin to permeate the carbohydrate-containing processed food ingredient prior to or during a heat-treating process at a temperature of 120°C or higher.

In addition, the present invention provides the use of dihydroquercetin or a plant extract containing dihydroquercetin for suppressing acrylamide formation in a processed food.

### Effects of the Invention

The present invention permits the production of the processed foods with a reduced level of acrylamide in a safe and convenient way.

### Brief Description of the Drawings

Fig.1 shows a photograph of potato chips that were fried after adding dihydroquercetin to the potato flake dough.
Fig.2 shows photographs of the potato chips that were fried in cooking oil, into which dihydroquercetin had been added.

### Embodiments of the Invention

The method for reducing the level of acrylamide is characterized in that dihydroquercetin is used as an ingredient for suppressing acrylamide formation. Dihydroquercetin is a kind of flavonoid with the structure shown below.

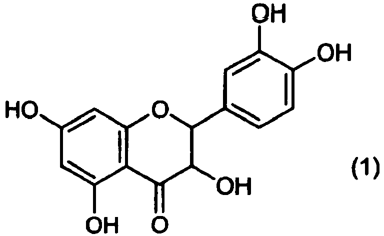

The Dihydroquercetin can be synthesized chemically, but plant extracts containing dihydroquercetin can also be used. The plants containing dihydroquercetin include, for example, those that belong to the family *Pinaceae.* Among them, the plants belonging to the genus *Pinus* or *Larix kaempferi* are preferable. More specifically, Siberian Larch (*Larix sibirica*), Dahurian Larch (*Larix dahurica*), Siberian Pine (*Pinus sibirica*), Scots Pine (*Pinus sylvestris*), Jezo Spruce (*Picea ajanensis*), etc. are preferable for the present invention.

The locus for extraction from the aforementioned plants may contain cortex and xylem, but the xylem containing cambiums is specifically preferred. The xylem from a plant belonging to the family *Pinaceae* such as Siberian Larch is rich in dihydroquercetin, therefore the xylem containing cambiums is the most preferred locus for extraction.

For the present invention, extraction methods using organic solvents, water, or mixtures thereof are preferred. Water, ethanol, ethyl acetate, acetone, or mixtures thereof can be used as solvents in the present invention, however, for safety reasons, etc, water, ethanol or a water/ethanol mixture is more preferred. More specifically, for example, it is preferable to extract chopped xylem or xylem containing cambiums with water, ethanol or a water/ethanol mixture in a condition of high temperature (i.e. 50 to 100°C). If necessary, the extract can be further purified by condensation, distillation, re-crystallization or other methods.

When using plant extracts containing dihydroquercetin, the concentration of dihydroquercetin in the extracts is preferably 50% (w/w) or higher, more preferably 60% (w/w) or higher, and further more preferably 80% (w/w) or higher. The upper limit of the concentration of dihydroquercetin in the extracts is 100% (w/w).

The processed food ingredients to be used in the present invention are ingredients containing carbohydrates such as starch that possibly form acrylamide during the heat-treating process of the processed food ingredients. More specifically, the present invention applies to the processed food ingredients containing carbohydrates, such as glucose and fructose, in combination with asparagine or peptides containing asparagine as a constituent amino acid.

Such processed food ingredients include asparagine-rich food materials such as potatoes, peas, black peppers, white peppers, burdock roots, kidney beans, turmeric, pumpkins, sweet potatoes, corns, wheat, rice and food materials derived from these. Such food materials include, for example, dehydrated and powdered forms thereof.

The method of the present invention is characterized in that dihydroquercetin is added to the aforementioned processed food ingredients or allowed to permeate the aforementioned processed food ingredients prior to or during the heat-treating process of the processed food ingredients.

In order to reduce acrylamide levels without affecting color, taste and flavor of the processed food products, the amount of dihydroquercetin added to the processed food ingredients is preferably 0.06 to 6% (w/w), more preferably 0.06 to 2% (w/w), further more preferably 0.06 to 0.6 parts by weight, and most preferably 0.06 to 0.3 parts by weight based on 100 parts by weight of the processed food ingredients on dry weight basis. By adding dihydroquercetin at the concentration, the level of acrylamide can be sufficiently reduced without affecting the color, taste, and flavor of the processed food products. This addition amount is based on the weight of dihydroquercetin and in the case of using the plant extract, the amount may be adjusted according to the dihydroquercetin content in the plant extract.

For addition or permeation of dihydroquercetin, powdered form of dihydroquercetin is acceptable as it can be uniformly dispersed and dissolved by direct addition to the processed food ingredients when the processed food ingredients are in liquid or paste form. However, when the processed food ingredients themselves are in powder or solid form, it is preferable that dihydroquercetin be dissolved in or mixed with water or ethanol and then added to the processed food ingredients. For permeation of dihydroquercetin, when frying, boiling, etc., it is preferable that dihydroquercetin be added into the cooking liquids or cooking oil, and then allowed to permeate the processed food ingredients during the heat-treating process.

When frying or boiling, it is difficult to determine the permeation amount of dihydroquercetin in the processed food ingredients, therefore it is preferable that dihydroquercetin be added into cooking liquids or cooking oil at a concentration of 0.06 to 6% (w/v), more preferably 0.06 to 2% (w/v), further more preferably 0.06 to 0.6% (w/v), and most preferably 0.06 to 0.3% (w/v) prior to the heat-treaing process. Since the solubility of dihydroquercetin in ordinary oils is relatively low, it is preferable that dihydroquercetin be dissolved in a small amount of pre-heated cooking oil, or in cooking oil containing a surfactant, a monoacyl glycerol or a diacyl glycerol. Also, dihydroquercetin can be dispersed in cooking oil by ultrasonication. The processed food ingredients can be fried in oil, into which dihydroquercetin was added, dispersed or preferably dissolved, and this method can be applied to the frying of sliced raw potatoes.

In the method for reducing the level of acrylamide of the present invention, acrylamide formation is suppressed even in the heat-treating process by adding dihydroquercetin to the processed food ingredients or allowing dihydroquercetin to permeate the processed food ingredients prior to or during the heat-treating process. A large amount of acrylamide is formed when the ingredients are heated at 120°C or higher, therefore the present invention can be applied to the production of processed foods that requires a heat-treating process such as frying, baking, roasting and boiling at 120°C or higher.

Processed foods to which the method of the present invention can be applied include potato chips, fried potatoes, popcorns, snack foods, rice crackers, cookies, crackers, biscuits, fried dough-cake, instant noodles, instant wanton and cereals.

According to the method of the present invention, the acrylamide content in the processed foods produced is able to be reduced to less than 70%, preferably to less than 60%, more preferably to less than 30 %, and most preferably to less than 15% of that found in the processed foods produced by conventional heat-treating methods.

### Examples

Following examples will be used to provide detailed illustrations of the present invention, but the present invention is not limited to these examples.

### Example 1

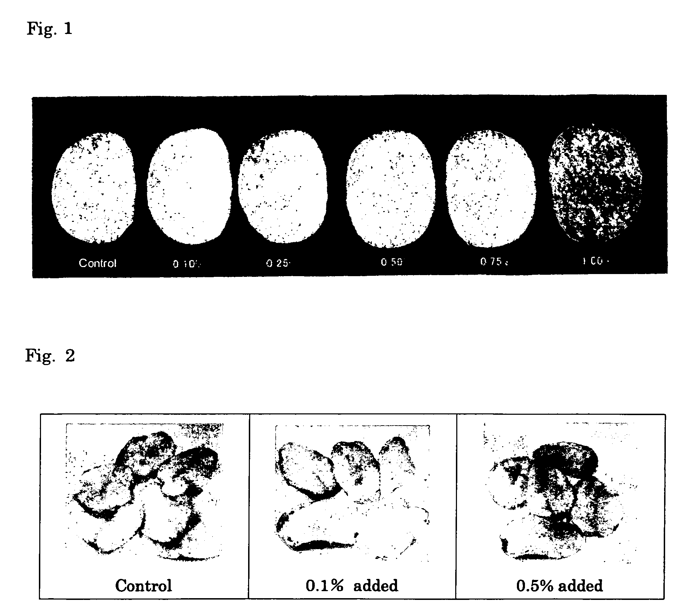

Using a Siberian Larch extract containing 60% of dihydroquercetin, the effect of reducing the level of acrylamide in potato chips was studied. Potato flakes were prepared as follows. Potatoes were first boiled at 70°C and cooled. Next, they were braised, then mashed, and the mashed dough was dried with hot air until the moisture content was reduced to from 4 to 9 % and then ground. The Siberian Larch extract was pre-dissolved in 3 ml ethanol and mixed with water, then the mixture was added to the ground potato flake dough. Potato chips were then produced by frying the dough at the conditions indicated in Table 1. The level of acrylamide found in these potato chips was measured by GC-MS. Table 1 shows the results, and Fig. 1 shows the photograph of the potato chips.

**[Table 1]**

| Conditions and Results of Each Sample | | | | | | |
|---|---|---|---|---|---|---|
| | Control | No. 1 | No. 2 | No. 3 | No. 4 | No. 5 |
| Extract added^{*1} | - | 0.10%^{*2} | 0.25% | 0.50% | 0.75% | 1.00% |
| Frying condition | 170°C, 20 sec | 170°C, 20 sec | 170°C, 20 sec | 170°C, 20 sec | 170°C, 20 sec | 170°C, 20 sec |
| Acrylamide level | 772 ppb | 545 ppb | 479 ppb | 565 ppb | 492 ppb | 238 ppb |
| Moisture content (%) | 2.9 | 2.8 | 2.9 | 2.6 | 2.8 | 2.9 |
| Reducing sugar in ingredient (%) | 1.85 | 1.85 | 1.85 | 1.85 | 1.85 | 1.85 |
| Dough pH | 5.8 | 5.8 | 5.8 | 5.8 | 5.8 | 5.8 |
| Product pH | 5.6 | 5.6 | 5.6 | 5.7 | 5.7 | 5.7 |

| | | | | | | |
|---|---|---|---|---|---|---|
| *1: The added amount was determined based on dry weight of the potato flake ingredients. *2: The extract contains 60% of dihydroquercetin. | | | | | | |

When dihydroquercetin was added at a concentration of 0.06 to 0.6 %, the level of acrylamide in potato chips was reduced by about 30 to 70 %, notably, when dihydroquercetin was added at a concentration of 0.6%, the level was reduced by about 70% (Table 1). Furthermore, the addition of dihydroquercetin did not affect the color, taste and flavor of the potato chips (Fig. 1).

### Example 2

A Siberian Larch extract containing 60% of dihydroquercetin was dissolved into a small amount of oil heated to 70°C, then the dihydroquercetin-containing oil was added to cooking oil. Potato chips were produced by frying sliced raw potatoes in the cooking oil. The level of acrylamide found in these potato chips was measured by GC-MS. Table 2 shows the results, and Fig. 2 shows the photographs of the potato chips.

**[Table 2]**

| Sample name | Control | Test product (1) | Test product (2) |
|---|---|---|---|
| Dihydroquercetin-containing extract added (w/v%) | | 0.1 | 0.5 |
| Frying temperature Frying time | 170°C 2 min | 170°C 2 min | 170°C 2 min |
| Acrylamide level^{*1} (ppb) | 857 | 194 | 142 |
| | 882 | 146 | 116 |
| Averaged acrylamide level (ppb) | 870 | 170 | 129 |
| Acrylamide level ratio vs. control | 100 | 20 | 15 |

| | | | |
|---|---|---|---|
| *1: Acrylamide level was measured twice by GC/MS. Isotope acrylamide, added to 5g of sample at a concentration of 2,000 ppb, was used as an internal standard. | | | |

The results show that the acrylamide level was significantly reduced in potato chips fried in cooking oil containing 0.06 to 0.3% (w/v) of dihydroquercetin. Furthermore, frying in cooking oil containing dihydroquercetin did not affect the color, taste and flavor of the potato chips (Fig. 2).

## Claims

1. A method for reducing a level of acrylamide in a processed food, comprising adding dihydroquercetin to a carbohydrate-containing processed food ingredient or allowing dihydroquercetin to permeate the carbohydrate-containing processed food ingredient prior to or during a heat-treating process, wherein the heat-treating process requires a temperature of 120°C or higher.

2. The method of claim 1, wherein a plant extract containing dihydroquercetin is used as a source of dihydroquercetin to be added or allowed to permeate.

3. The method of claim 1 or 2, wherein the processed food contains carbohydrate and asparagine or a peptide containing asparagine as a constituent amino acid.

4. The method of any one of claims 1 to 3, wherein the carbohydrate-containing processed food ingredient is heat-treated in cooking liquids or cooking oil, into which dihydroquercetin has been added.

5. A method according to any one of claims 1 to 4 which is a production method for producing a processed food with a reduced level of acrylamide.

6. Use of dihydroquercetin or a plant extract containing dihydroquercetin for suppressing acrylamide formation in a processed food.

## Patentansprüche

1. Verfahren zur Verringerung des Gehalts an Acrylamid in einem verarbeiteten Nahrungsmittel, umfassend die Zugabe von Dihydroquercetin zu einer Zutat eines Kohlehydrat-haltigen verarbeiteten Nahrungsmittels oder Ermöglichen, dass Dihydroquercetin die Zutat des Kohlehydrat-haltigen verarbeiteten Nahrungsmittels vor oder während eines Wärmebehandlungsverfahrens durchdringt, wobei das Wärmebehandlungsverfahren eine Temperatur von 120°C oder höher erfordert.

2. Verfahren nach Anspruch 1, wobei ein Dihydroquercetin enthaltender Pflanzenextrakt als Quelle für das Dihydroquercetin verwendet wird, das zugegeben werden soll oder dem ein Durchdringen ermöglicht wird.

3. Verfahren nach Anspruch 1 oder 2, wobei das verarbeitete Nahrungsmittel Kohlehydrate und Asparagin enthält oder ein Peptid, das Asparagin als Aminosäurebestandteil enthält.

4. Verfahren nach einem der Ansprüche 1 bis 3, wobei die Zutat des Kohlehydrathaltigen verarbeiteten Nahrungsmittels in kochenden Flüssigkeiten oder kochendem Öl, wozu Dihydroquercetin zugegeben wurde, wärmebehandelt wird.

5. Verfahren nach einem der Ansprüche 1 bis 4, welches ein Herstellungsverfahren zur Herstellung eines verarbeiteten Nahrungsmittels mit einem verringertem Gehalt an Acrylamid ist.

6. Verwendung von Dihydroquercetin oder eines Dihydroquercetin enthaltenden Pflanzenextrakts zur Unterdrückung der Acrylamid-Bildung in einem verarbeiteten Nahrungsmittel.

## Revendications

1. Procédé de réduction d'un taux d'acrylamide dans un aliment transformé, comprenant l'ajout de dihydroquercétine à un ingrédient alimentaire transformé contenant des glucides ou le fait de permettre à de la dihydroquercétine de pénétrer dans l'ingrédient alimentaire transformé contenant des glucides avant ou pendant un procédé de traitement thermique, dans lequel le procédé de traitement thermique requiert une température supérieure ou égale à 120 °C.

2. Procédé selon la revendication 1, dans lequel un extrait de plante contenant de la dihydroquercétine est utilisé comme source de dihydroquercétine à ajouter ou à laisser pénétrer.

3. Procédé selon la revendication 1 ou 2, dans lequel l'aliment transformé contient des glucides et de l'asparagine ou un peptide contenant de l'asparagine en tant qu'acide aminé constitutif.

4. Procédé selon l'une quelconque des revendications 1 à 3, dans lequel l'ingrédient alimentaire transformé contenant des glucides est soumis à un traitement thermique dans des liquides de cuisson ou dans une huile de cuisson, auxquels la dihydroquercétine a été ajoutée.

5. Procédé selon l'une quelconque des revendications 1 à 4, qui est un procédé de production permettant de produire un aliment transformé présentant un taux réduit d'acrylamide.

6. Utilisation de dihydroquercétine ou d'un extrait de plante contenant de la dihydroquercétine pour supprimer la formation d'acrylamide dans un aliment transformé.
